# EUROPEAN PATENT APPLICATION

(11) **EP 4 592 799 A1**
(43) Date of publication of application: **30.07.2025**
(21) Application number: 23867244.8
(22) Date of filing: 30.08.2023
(51) Int. Cl.: G06F 3/01

(54) **METHOD AND APPARATUS FOR AUGMENTED REALITY INTERACTION, DEVICE, AND STORAGE MEDIUM**

(30) Priority: 20.09.2022 CN 202211141379
(71) Applicant: Beijing Zitiao Network Technology Co., Ltd., Beijing 100190 (CN)
(72) Inventor: LI, Lin, Beijing 100028 (CN)
(74) Representative: Dentons UK and Middle East LLP
(86) International application number: PCT/CN2023/115928
(87) International publication number: WO 2024/060953

(57) **Abstract**

In a method for augmented reality (AR) interaction, indication information of a target object and one or more components (406-410, 506, 508, 510, 512, 514) of the target object are displayed in an AR scene (150, 400, 500) displayed by a user device (110). In response to a change in a posture of the user device (110), rendering of the one or more components (406-410, 506, 508, 510, 512, 514) is updated in the AR scene (150, 400, 500). In response to the updated one or more components (406-410, 506, 508, 510, 512, 514) visually matching the indication information, the target object is displayed as an entirety in the AR scene (150, 400, 500). According to this method, a user can flexibly control one or more components (406-410, 506, 508, 510, 512, 514) in the AR scene (150, 400, 500) by changing the posture of the device, so that they visually match and finally are assembled into a target object. The interaction experience and the interest of the user in the AR scene can be improved.

## Description

This application claims priority to Chinese Patent Application No. CN 202211141379.9, filed on Sep. 20, 2022, and entitled "METHOD, APPARATUS, DEVICE AND STORAGE MEDIUM FOR AUGMENTED REALITY INTERACTION", the entirety of which is incorporated herein by reference.

### FIELD

Example embodiments of the present disclosure generally relate to augmented reality (AR), and more particularly, to a method, an apparatus, a device and a computer-readable storage medium for interacting in an AR scene.

### BACKGROUND

Augmented reality (AR) technology is a technology that fuses virtual information with the real world. An AR device may overlay a virtual object with a picture in the real world for display in an AR scene. As such, an image appearing in the field of view of a user includes both the picture of the real world and the virtual object. That is, the AR scene may enable the user to see the virtual object and the real world at the same time, and bring an immersive experience to the user. AR has a wide application in many fields such as games, simulation, and emulation. Various interaction techniques allow users to interact with a virtual object or an entity in an AR scene. The approaches, efficiency and effect of these interaction technologies directly affect the user experience in using the AR device.

### SUMMARY

In a first aspect of the present disclosure, a method for augmented reality (AR) interaction is provided. The method comprises: displaying indication information of a target object and one or more components of the target object in an AR scene displayed by a user device; updating rendering of the one or more components in the AR scene based on a change in a posture of the user device; and in response to the updated one or more components visually matching the indication information, displaying the target object as an entirety in the AR scene.

In a second aspect of the present disclosure, an apparatus for augmented reality (AR) interaction is provided. The apparatus comprises a display controlling module configured to display indication information of a target object and one or more components of the target object in an AR scene displayed by a user device; a rendering updating module configured to update rendering of the one or more components in the AR scene based on a change in a posture of the user device; and an object interacting module configured to, in response to the updated one or more components visually matching the indication information, display the target object as an entirety in the AR scene.

In a third aspect of the present disclosure, an electronic device is provided. The electronic device comprises at least one processing unit; and at least one memory coupled to the at least one processing unit and stores an instruction for execution by the at least one processing unit, the instruction, when executed by the at least one processing unit, causes the device to perform the method of the first aspect of the present disclosure.

In a fourth aspect of the present disclosure, a computer-readable storage medium is provided. The computer-readable storage medium stores a computer program, and the computer program is executable by the processor to perform the method of first aspect of the present disclosure.

It should be understood that the content described in the content part of the present disclosure is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages and aspects of the various implementations of the present disclosure will become more apparent from the following detailed description taken in combination with the accompanying drawings. In the drawings, the same or similar reference numbers refer to the same or similar elements, wherein:
FIG. 1 illustrates a schematic diagram of an example environment in which embodiments of the present disclosure can be implemented;
FIG. 2 illustrates a schematic diagram illustrating the principle of "near large far small";
FIG. 3 illustrates a flowchart of a method for AR interaction according to some embodiments of the present disclosure;
FIG. 4A and FIG. 4B respectively illustrate schematic diagrams of several examples of displaying indication information of a target object in an AR scene according to some embodiments of the present disclosure;
FIG. 4C and FIG. 4D respectively illustrate schematic diagrams of rendering updates of one or more components as a posture of a user device changes according to some embodiments of the present disclosure;
FIG. 4E illustrates a schematic diagram when one or more components visually match indication information of a target object according to some embodiments of the present disclosure;
FIG. 4F illustrates a schematic diagram of displaying and manipulating a target object as an entirety according to some embodiments of the present disclosure;
FIGS. 5A, 5B and 5C illustrate schematic diagrams of another example of operating a component of a target object to match a target object contour according to some embodiments of the present disclosure;
FIG. 6 illustrates a block diagram of an apparatus for augmented reality according to some embodiments of the present disclosure; and
FIG. 7 illustrates a block diagram of a device capable of implementing various embodiments of the present disclosure.

### DETAILED DESCRIPTION

Embodiments of the present disclosure will be described in more detail below with reference to the accompanying drawings. While some embodiments of the present disclosure are shown in the accompanying drawings, it should be understood that the present disclosure may be implemented in various forms, and should not be construed as limited to the embodiments set forth herein, but rather, these embodiments are provided for a more thorough and complete understanding of the present disclosure. It should be understood that the drawings and embodiments of the present disclosure are for exemplary purposes only and are not intended to limit the scope of the present disclosure.

In the description of the embodiments of the present disclosure, the terms "including", "comprising" and the like should be understood to include "including but not limited to" and "comprising but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below.

The term "in response to" means that a corresponding event occurs or condition is satisfied. It will be appreciated that the timing of execution of subsequent actions performed in response to the event or condition is not necessarily strongly correlated with the time at which the event occurs or the condition is satisfied. In some cases, subsequent actions may be performed immediately when an event occurs or a condition meets; in other cases, subsequent actions may also be performed after a period of time after an event occurs or a condition meets.

It may be understood that the data involved in the technical solution (including but not limited to the data itself, the obtaining or use of the data) should follow the requirements of the corresponding laws and regulations and relevant provisions.

It can be understood that, before the technical solutions disclosed in the embodiments of the present disclosure are applied, the types, the usage scope, the usage scenario and the like of personal information related to the present disclosure should be notified to the user in an appropriate manner according to the relevant laws and regulations, and the authorization of the user is obtained.

For example, in response to receiving an active request from a user, prompt information is sent to the user to explicitly prompt the user that the requested operation will need to obtain and use personal information of the user, so that the user may autonomously select whether to provide personal information to software or hardware executing the operation of the technical solution of the present disclosure according to the prompt information.

As an optional but non-limiting implementation, in response to receiving an active request of a user, a manner of sending prompt information to the user may be, for example, a pop-up window, and prompt information may be displayed in a text manner in the pop-up window. In addition, the pop-up window may further carry a selection control for the user to select "agree" or "not agree" to provide personal information to the electronic device.

It may be understood that the foregoing notification and obtaining a user authorization process are merely illustrative, and do not constitute a limitation on implementations of the present disclosure, and other manners of meeting related laws and regulations may also be applied to implementations of the present disclosure.

Embodiments of the present disclosure are described below with reference to the accompanying drawings. It will be understood from the following description that, according to embodiments of the present disclosure, a solution for interacting with a virtual object in an AR scene is provided for a user. In an AR scenario, a user is simultaneously displayed with indication information about a target virtual object and one or more components of the virtual object. Initially, these components are visually dispersed, that is, not assembled into a target virtual object. A user may change a posture (for example, an orientation, a tilt, a distance, or the like) of his/her user device to change the field of view (FoV) of an AR virtual camera for that AR scene. Correspondingly, the rendering effect of these components in the AR scene may be also refreshed. When the user device reaches a certain predetermined posture, the one or more components rendered in the AR scene will match the target virtual object visually. At this point, an "assembly" operation may be triggered, that is, these dispersed components are rendered as a target virtual object as an entirety. The user may then interactively manipulate the target virtual object as an entirety. In this way, the user can obtain an interesting interaction process, improving the user experience of the AR environment.

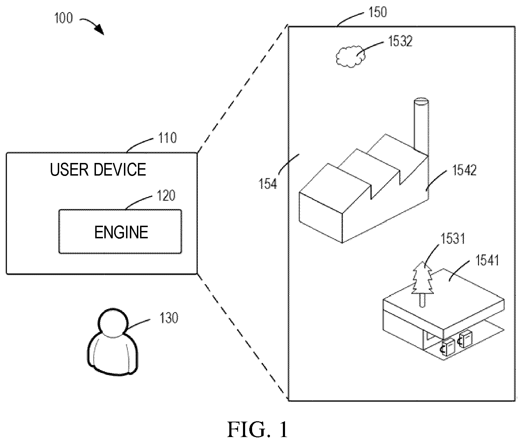

FIG. 1 illustrates a schematic diagram of an example environment 100 in which embodiments of the present disclosure can be implemented. In this example environment 100, an AR scene 150 is displayed to a user 130 at a user device 110 or by the user device 110. The AR scene 150 may be displayed on a screen of the user device 110. The AR scene 150 may include a picture 154 of the real-world and virtual objects 1531 and 1532 superposed on the picture 154.

In the picture 154, objects 1541 and 1542 are representations of real objects in the real world in the AR scene 150, such as images of real objects or other forms of representations. For the purpose of discussion only, the objects 1541 and 1542 are also referred to herein as 3D objects. When a posture of the user device 110 changes, the field of view of an AR camera used for the AR scene also changes accordingly. Accordingly, the picture 154 will change as the posture of the user device 110 changes. Correspondingly, rendering of the 3D objects displayed in the picture 154 is also updated, resulting in a change in the visual effect of these 3D objects. Similarly, the rendering of the virtual objects 1531 and 1532 may also be updated, causing the visual effects of these virtual objects to change accordingly.

In some embodiments, the user device 110 may include a positioning component. The positioning component is configured to obtain a posture of the user device 110, and determine an object in the AR scene and a location of a virtual camera in real-time based on the posture. Thus, it may be achieved that the rendering updates as the posture of the user device 110 changes.

It should be understood that the AR scene 150 is merely illustrative and is not intended to limit the scope of the present disclosure. The AR scene 150 may include more or fewer virtual objects superposed on the picture 154, or may include other elements, such as a user interface (UI) element.

The user device 110 may be any type of mobile terminals, fixed terminals, or portable terminals, including a mobile phone, a desktop computer, a laptop computer, a notebook computer, a netbook computer, a tablet computer, a media computer, a multimedia tablet, a gaming device, a wearable device, a personal communication system (PCS) device, a personal navigation device, a personal digital assistant (PDA), an audio/video player, a digital camera/camcorder, a positioning device, a television receiver, a radio broadcast receiver, an electronic book device, or any combination of the foregoing, including accessories and peripherals of these devices, or any combination thereof. In some embodiments, the user device 110 can also support any type of interfaces for a user (such as a "wearable" circuit, or the like).

The user device 110 may have an AR engine 120 mounted thereon. The AR engine 120 is used to drive a display of the AR scene 150. In some embodiments, the AR engine 120 may be an AR game engine; and, accordingly, the AR scene 150 may be an AR game scene. In some embodiments, the AR engine 120 may be part of a content-sharing application (or "social application"). The social application can provide the user 130 with services related to multimedia content consumption, such as allowing users to post, view, comment, forward and create multimedia works, and the like. Accordingly, the AR scene 150 may be an AR content creation scenario. For example, in some embodiments, the AR scene 150 may be part of an effect provided by a social application. The positioning component described above may be part of the AR engine 120.

It should be understood that the structure and function of the environment 100 is described for the purposes of illustration only and does not imply any limitation to the scope of the present disclosure. The user device 110 may include any suitable structure and function to enable interaction with the AR scene.

It can be understood that according to the perspective principle, when the field of view of a user or a virtual camera is different, the visual effect of a 3D object displayed in the AR scene will also change. Taking human eyes as an example, crystalline lens in the eye is equivalent to a convex lens, and the retina is equivalent to an image plane. The human eye sees an object by imaging it on the retina. A subtended angle from the center of the pupil to the object is equal to a viewing angle. Therefore, a size of the viewing angle determines a size of an image of an object on the retina. When an object is far away from the eye, the viewing angle is relatively small, so the size of the object appears smaller; and when the same object is close to the eye, the viewing angle becomes larger, and the appearance of the object appears larger. The size of the object does not change, but because the viewing angle is different, the size of the appearance changes visually. This is a visually "near large far small" principle. The camera also follows this principle in capturing and imaging.

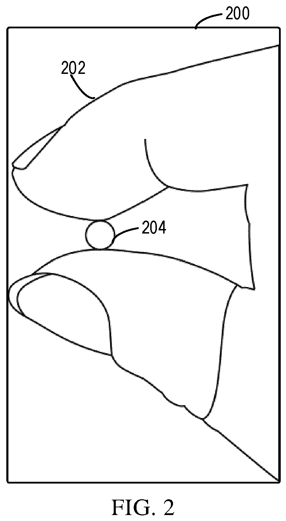

With this principle, some visual effects that do not occur in the real world can be achieved. For example, FIG. 2 illustrates a scene 200 captured by a camera. In the scene 200, because a hand is closer to a viewing point, an imaging 202 of the hand appears to be relatively large; while the sun is far away from the viewing point, an imaging 204 of the sun appears small. This enables the effect of "pinching the sun with a hand".

Similarly, due to different viewing points and/or viewing angles, there may be many variations in the visual effect of the same object being rendered in the AR scene. According to the embodiments of the present disclosure, the principle of vision and imaging is fully utilized in the process of supporting user interaction with a 3D object in an AR scene, and a set of interaction mechanisms capable of enabling the user to obtain a good experience are provided.

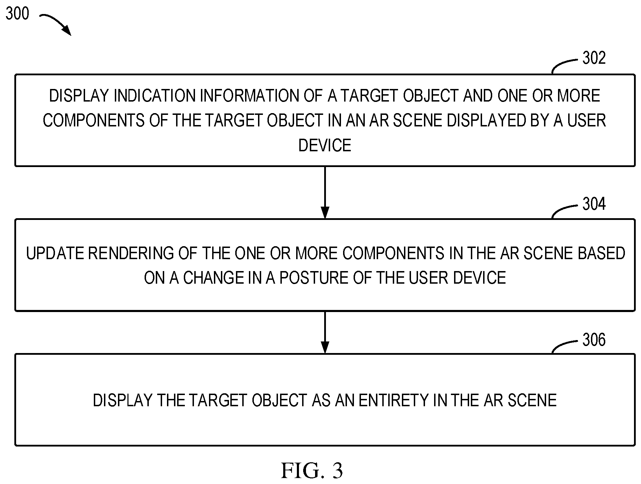

FIG. 3 shows a flowchart of a method 200 for AR interaction according to some embodiments of the present disclosure. In some embodiments, the method 200 may be implemented, for example, at the user device 110 shown in FIG. 1, such as by the AR engine 120 or other suitable modules/apparatuses.

At block 302, indication information of a target object and one or more components of the target object are displayed in the AR scene displayed by the user device 110.

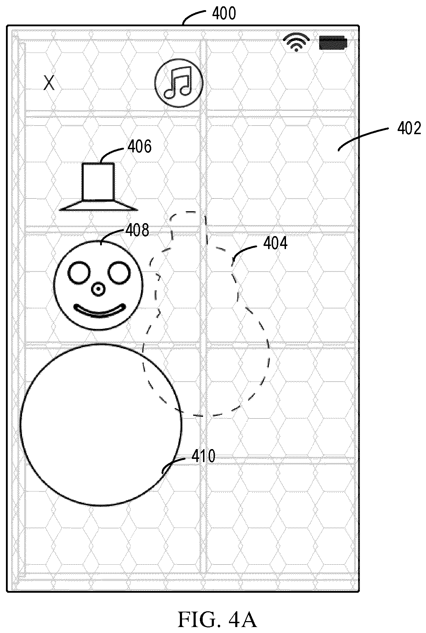

FIG. 4A illustrates a schematic diagram of displaying indication information of a target object and a component of the target object in an AR scene 400 displayed by the user device 110. As shown, in the AR scene 400, a real-world portion 402 and a virtual object captured by a camera of the user device 110 are included. In this example, the real-world portion 402 is a bookshelf and is used as a background portion of the scene.

The virtual object includes one or more components of the target object. In an example shown in FIG. 4A, the target object (or "target virtual object") is a snowman. A plurality of components 406, 408, and 410 of the target object are displayed in the AR scene 400. More specifically, the component 406 is a hat of the snowman, the component 408 is a head of the snowman, and the component 410 is a body of the snowman. It is noted that in some embodiments, only one component of the target object, such as the most dominant or largest component, may be displayed.

The AR scene 400 also displays indication information of the target object "snowman". In an example shown in FIG. 4A, the indication information is a contour 404 of the target object "snowman". The contour 404 is displayed as a contour line. In some embodiments, the contour 404 may be displayed in the AR scene 400 at a predetermined size and/or location. That is, when a user changes a posture of the user device 110 to cause a change in the field of view of the AR scene 400, the location and size of the contour 404 on the user interface of the user device 110 may remain unchanged. Alternatively, in other embodiments, the contour 404 may change the location and/or size as the scene changes. Only by seeing the split components, it is difficult for a user to discern an overall shape of the target object to be assembled. A goal of splicing fragments may be well recognized by displaying the contour of the target object to a user. In this way, the user experience may be further improved.

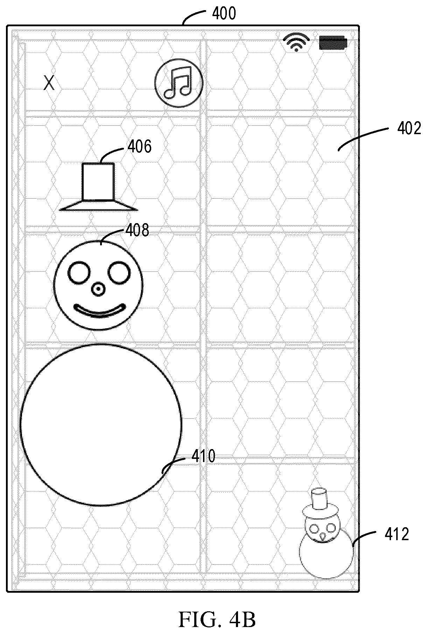

It is to be noted that the contour is only one example of the indication information for the target object. Other suitable forms of indication information are possible. For example, in the example shown in FIG. 4B, other displayed content is consistent with the example of FIG. 4A, but the indication information of the target object changes from a contour to an icon 412. The appearance of the icon 412 is a snowman, indicating to the user that the current target object is a snowman. In addition to or instead of the icon, a text, an animation and the like may be displayed as the indication information of the target object. The present disclosure is not limited in this respect.

Returning to FIG. 3, at block 304, rendering of the one or more components of the target object in the AR scene is updated based on a change in a posture of the user device 110. Specifically, in operation, a user may change various posture parameters such as an orientation, an angle, and a location of the user device 110. The change in the posture of the user device 110 will result in a change in the field of view of the AR camera for the AR scene. Correspondingly, in the rendering result displayed to the user via the user interface, the visual effect of the 3D object in the scene will also change. For example, the positioning component may obtain the posture of the user device 110 in real-time, thereby changing the location of the AR camera and coordinates of the one or more components. The rendering of the one or more components also changes accordingly.

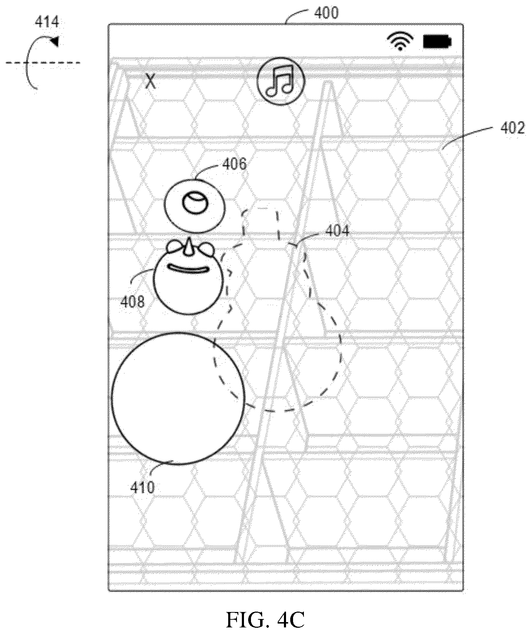

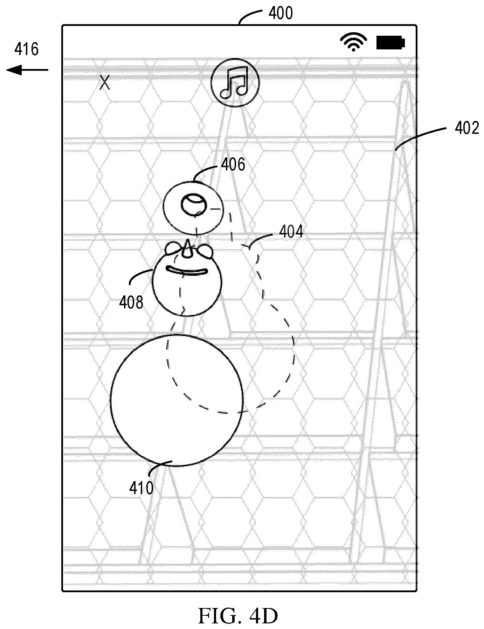

FIGS. 4C and 4D respectively illustrate schematic diagrams of rendering updates of one or more components as a posture of the user device 110 changes in accordance with some embodiments of the present disclosure. In a schematic diagram shown in FIG. 4C, it can be seen that as a user changes the orientation of the user device 110 in a direction indicated by an arrow 414, the rendering of the 3D object in the AR scene 400 is updated accordingly. As the field of view of the camera of the user device 110 changes, the scene included in the background portion (that is, the image of the real-world scene) changes as compared to the scene of FIGS. 4A to 4B.

At the same time, the rendering of the components 406 to 408 of the target object also updates as the field of view of the AR camera changes. In particular, the component 406 is visually smaller and the component 410 is visually larger in accordance with the near large far small principle. Moreover, as the viewing angle of the AR camera changes, the visible portion of respective components may also change accordingly. That is, some previously invisible portions may become visible; and some previously visible portions may become invisible anymore.

Moreover, according to the vision and imaging principle, when the field of view of the AR camera is different, a relative locational relationship of a plurality of objects whose actual relative relationship remains unchanged may change visually. According to this principle, as the posture of the user device 110 changes, due to the change of the perspective relationship in the AR scene, the visual locational relationship between the respective components may also change. In particular, in the illustrated example, the distance between the components 406 to 410 appears to change as compared to the states shown in FIGS. 4A and 4B. it is to be note that this is merely a visual change in rendering updates, and their actual relative locational relationships in the scene do not change.

FIG. 4D illustrates a rendering update of the components 406 to 410 of the target object caused by a user further changing the posture of the user device 110 along a direction 416. Specifically, in an example shown in FIG. 4D, a user shifts the user device 110 to a left hand side, such that the updated rendered components 406 to 410 appear to be right in the AR scene 400 compared to FIG. 4C, thereby getting closer to the indication information of the target object (specifically, the contour 404 in this example).

In summary, in operation, the field of view of the AR camera may be determined according to the posture of the user device 110, and the components 406 to 410 of the target object are rendered in the AR scene 400 according to the field of view. At the same time, it may be noted that in the examples shown in FIG. 4C and FIG. 4D, the contour 404 does not change its appearance as the posture of the user device 110 changes. That is, the contour 404 remains in a fixed location and size in the user interface. Alternatively, in other embodiments, the contour 404 may also appropriately change its location and size as the posture of the user device 110 changes, but a degree of change may be different from that of the components 406-410.

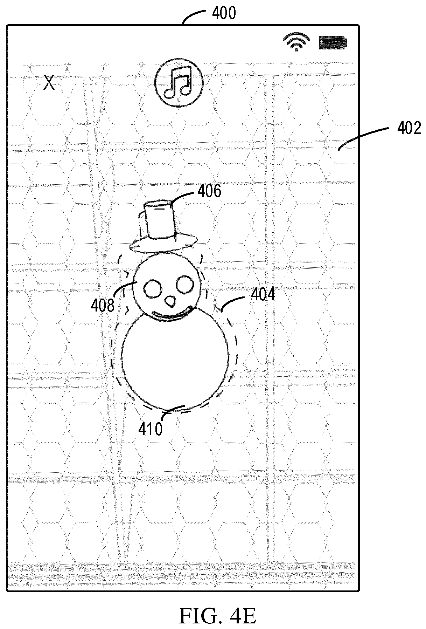

It will be understood that as a user adjusts the display of the one or more components 406 to 410 of the target object by changing the device posture, and in a certain state, the updated one or more components 406 to 410 are visually matched with the indication information of the target object. For example, in the state shown in FIG. 4E, the overall contour visually formed by the components 406 to 410 coincides with the contour 404 of the target object. That is, within a given tolerance range, both of them are consistent with each other in a shape and a size.

Such visually matching may be detected by various suitable algorithms. For example, in some embodiments, the AR engine 120 may pre-compute and store a target placement associated with the target object. When the placement of the AR camera associated with the AR scene is close to or aligned with the target placement, it is considered that the plurality of components of the target object visually fall into a range defined by the contour. In operation, as the posture of the user device 110 changes, the AR engine 120 correspondingly determines the current placement of the AR camera and compares the current placement with the target placement.

The placement may be characterized by various suitable means, such as by a location, a height, a distance, an orientation, or the like of the camera. If a difference between the current placement of the AR camera and a predetermined target placement is below a predetermined threshold, it may be determined that the one or more components are visually matched to the contour. For example, if the location and rotation angle orientation of the current placement of the AR camera are within a certain error range compared to the target placement, the two placements may be considered as close, and thereby the one or more components may be determined as visually matched with the contour.

It will be understood that, in other embodiments where the indication information is not a contour, the foregoing approaches for placement matching is also applicable. That is, when a user operates the user device 110 so that the AR camera reaches a predetermined target placement, it is considered that the overall effect formed visually by these components is matched with the displayed icon or text.

It should be understood, however, that such a match with a predetermined target placement is not required, but merely illustrative. For example, in some alternative embodiments, a maximum outer bounding box of these components may be computed after updating the rendering of the components, and the bounding box and the contour as the indication information of the target object are matched to detect a match visually. Other matching approaches are possible, and the present disclosure is not limited in this respect.

FIG. 4E illustrates a schematic diagram when the components 406 to 410 visually match indication information of a target object according to some embodiments of the present disclosure. In this example, it can be seen that the components 406 to 410 as an entirety visually lie exactly within the contour 404.

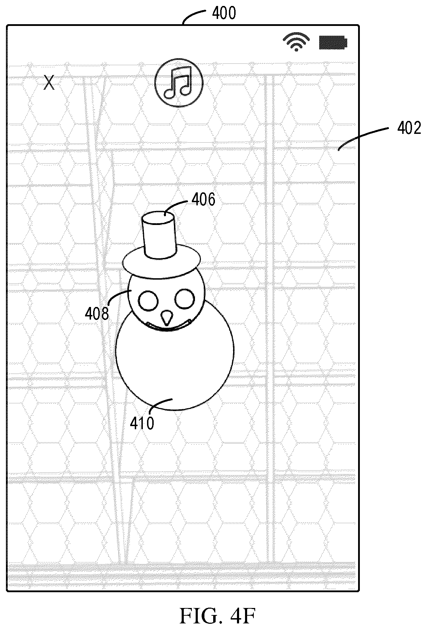

Returning to FIG. 3, in response to the aforementioned matching, at block 306, a target object is displayed as an entirety in an AR scene. For example, referring to FIG. 4F, a complete target object 418, that is, a snowman, is rendered as an entirety in the AR scene 400. At this point, respective components of the snowman are no longer separate individuals. Instead, they are displayed and rendered as an object or a virtual object in the AR scene 400.

For example, when the user changes the posture of the user device 110 again, the rendering of the snowman after assembly will be updated accordingly, but an "explosion diagram" effect of separating the components from each other shown in FIG. 4C and FIG. 4D is not displayed again. That is, after the components of the target object visually match the indication information of the target object, the AR engine 120 no longer updates the rendering of the components 406 to 410 with the change of the posture of the user device 110; but only renders and updates the target object 418 as an entirety.

In some embodiments, if a positioning component is used, the positioning component may be disabled or closed in response to the matching described above. This means that a change in the posture of the user device 110 by the user (for example, a shake by the user) does not affect the location of the AR camera. Instead, the placement of the AR camera is aligned with the target placement through placement hosting and calibration. Thus, the target object may be rendered as an entirety.

**In** such an embodiment, when the placement of the AR camera is close to the target placement, the target object may be displayed as an entirety. In this way, a slight shake of the user device (for example, hand shaking of a user) which causes a user to spend a long time achieve a goal of object assembly may be avoided. This further improves the user experience.

Alternatively, or in addition, in some embodiments, after the one or more components are "assembled" into the target object at block 306, the user may operate (for example, rotate, zoom, drag, or the like) the target object 418 as an entirety. For example, after the aforementioned hosting and calibration is complete, the AR component may be enabled to revert control authority of the user. After that, the user may interact with the target object as an entirety.

In some embodiments, once the updated components visually match the indication information of the target object, the AR engine 120 may cease rendering the indication information of the target object, such as its contour information, in the AR scene 400. For example, in FIG. 4F, the contour 404 is no longer displayed.

Some embodiments of the present disclosure have been described above with reference to several example scenarios. According to an embodiment of the present disclosure, a user may visually assemble one or more independent components in the AR scene into a complete target object by adjusting the posture of the user device. The whole interaction process is challenging and interesting, which can be widely applied to the fields of AR effects, cognitive behavior training and assistance, simulation, games and the like of social applications, improving the interactive experience of users.

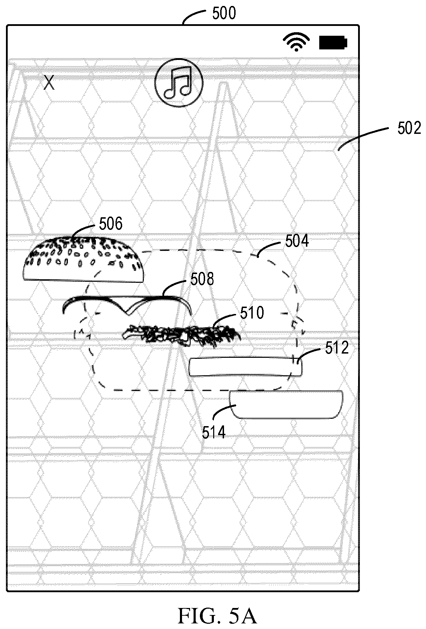

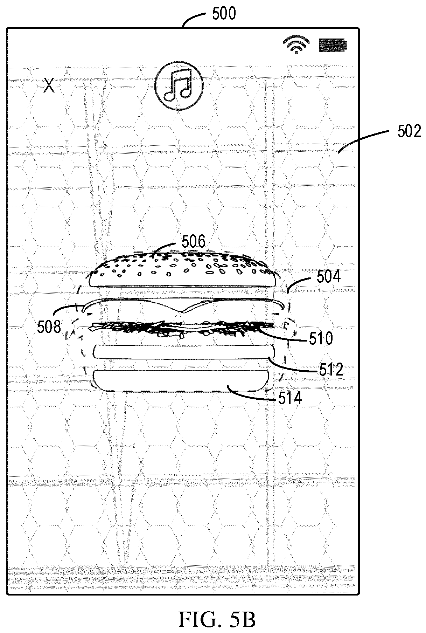

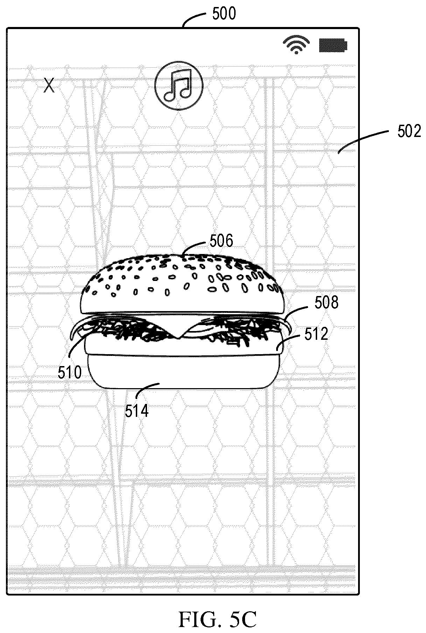

FIGS. 5A, 5B, and 5C illustrate schematic diagrams of another example of operating a component of a target object to match a target object contour according to some embodiments of the present disclosure. In the example shown here, an AR scene 500 also has a background portion 502, which is an image of a real-world scene captured by a camera of the user device 110 (the background portion in this example).

In addition to the background portion 502, as shown in FIG. 5A, a contour 504 of the target object "hamburger" and a plurality of components 506, 508, 510, 512, 514 of the target object are first displayed to a user in the AR scene 500. More specifically, in this example, these components are bread slices, a patty, a cheese slice, and a piece of vegetable that make up the hamburger.

As shown in FIG. 5B, a user makes the components 506, 508, 510, 512, 514 visually fall within the contour 504 by adjusting the posture of the user device 110, and the difference between the boundaries of the two is within a predetermined tolerance range. As described above, in some embodiments, this may be detected, for example, by detecting whether the placement of the AR camera reaches a predetermined target placement.

As shown in FIG. 5C, once the components 506, 508, 510, 512, 514 are determined to visually match the contour 504, the positioning component is disabled to transfer the control authority of the user. That is, then, the rendering updates and/or the corresponding user operations are performed on the target object "hamburger" 516 as an entirety, while the respective components 506, 508, 510, 512, 514 can no longer be manipulated independently. Meanwhile, the display of the contour 504 is ceased.

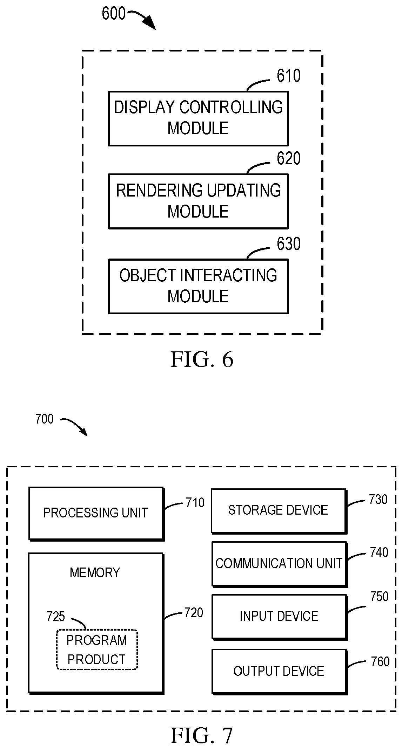

FIG. 6 illustrates a block diagram of an apparatus 600 for AR interaction. As shown, the apparatus 600 comprises a display control module 610 configured to display indication information of a target object and one or more components of the target object in an AR scene displayed by a user device. The apparatus 600 further comprises a rendering updating module 620 configured to update rendering of the one or more components in the AR scene based on a change in a posture of the user device. The apparatus 600 further comprises an object interacting module 630 configured to, in response to the updated one or more components visually matching the indication information, display the target object as an entirety in the AR scene.

In some embodiments, the display controlling module 610 is configured to display a contour of the target object at a predetermined size and/or location in the AR scene.

In some embodiments, the display controlling module 610 is further configured to, in response to the updated one or more components visually matching the indication information, cease displaying the contour in the AR scene.

In some embodiments, the object interacting module 630 is further configured to, in response to receiving an input for the target object after displaying the target object as the entirety, manipulate the target object as an entirety according to the input.

In some embodiments, the apparatus 600 further comprises a visual matching module (not shown), which is configured to determine whether the one or more components visually match the indication information by: determining a current placement of an AR camera for the AR scene according to a posture of the user device; comparing the current placement with a predetermined target placement associated with the target object; and in response to a difference between the current placement and the target placement being below a predetermined threshold, determining that the one or more components visually match the indication information.

In some embodiments, the rendering updating module 620 is configured to determine a field of view of an AR camera for the AR scene according to a posture of the user device; and rendering the one or more components in the AR scene according to the field of view of the AR camera.

In some embodiments, the rendering updating module 620 is further configured to, in response to the updated one or more components visually matching the indication information, cease updating the rendering of the one or more components with the change in the posture of the user device.

The units included in the apparatus 600 may be implemented in various manners, including software, hardware, firmware, or any combination thereof. In some embodiments, one or more units may be implemented using software and/or firmware, such as machine-executable instructions stored on a storage medium. In addition to or as an alternative to machine-executable instructions, some or all of the units in the apparatus 600 may be implemented, at least in part, by one or more hardware logic components. By way of example and not limitation, example types of hardware logic components that may be used include a field programmable gate array (FPGA), an application specific integrated circuit (ASIC), an application specific standard product (ASSP), a system on chip (SOC), a complex programmable logic device (CPLD), and the like.

FIG. 7 illustrates a block diagram of a computing device 700 in which one or more embodiments of the present disclosure may be implemented. It should be understood that the computing device 700 shown in FIG. 7 is merely exemplary and should not constitute any limitation on the functionality and scope of the embodiments described herein. The computing device 700 shown in FIG. 7 may be configured to implement the user device 110 in FIG. 1.

As shown in FIG. 7, the computing device 700 is in the form of a general-purpose electronic device. Components of the computing device 700 may include, but are not limited to, one or more processors or processing units 710, a memory 720, a storage device 730, one or more communication units 740, one or more input devices 750, and one or more output devices 760. The processing unit 710 may be an actual or virtual processor and capable of performing various processes according to programs stored in the memory 720. In multiprocessor systems, multiple processing units execute computer-executable instructions in parallel to improve parallel processing capabilities of the computing device 700.

The computing device 700 typically includes a plurality of computer storage medium. Such medium may be any available medium accessible by the computing device 700, including, but not limited to, volatile and non-volatile medium, removable and non-removable medium. The memory 720 may be a volatile memory (for example, a register, a cache, a random access memory (RAM)), a non-volatile memory (for example, a read-only memory (ROM), an electrically erasable programmable read-only memory (EEPROM), flash memory), or some combination thereof. The storage device 730 may be a removable or non-removable medium and may include a machine-readable medium, such as a flash drive, a magnetic disk, or any other medium, which may be capable of storing information and/or data (for example, training data for training) and may be accessed within the computing device 700.

The computing device 700 may further include additional removable/non-removable, volatile/non-volatile storage medium. Although not shown in FIG. 7, a disk drive for reading or writing from a removable, non-volatile magnetic disk (for example, a "floppy disk") and an optical disk drive for reading or writing from a removable, non-volatile optical disk may be provided. In these cases, each drive may be connected to a bus (not shown) by one or more data medium interfaces. The memory 720 may include a computer program product 725 having one or more program modules configured to perform various methods or actions of various embodiments of the present disclosure.

The communication unit 740 is configured to communicate with another electronic device through a communication medium. Additionally, the functionality of components of the computing device 700 may be implemented in a single computing cluster or multiple computing machines capable of communicating over a communication connection. Thus, the computing device 700 may operate in a networked environment using a logical connection with one or more other servers, network personal computers (PCs), or another network node.

The input device 750 may be one or more input devices such as a mouse, a keyboard, a trackball, or the like. The output device 760 may be one or more output devices, such as a display, a speaker, a printer, or the like. The computing device 700 may also communicate with one or more external devices (not shown) as needed, for example the external device may be a storage device, a display device, or the like, communicate with one or more devices that enable a user to interact with the computing device 700, or communicate with any device (for example, a network card, a modem, or the like) that enables the computing device 700 to communicate with one or more other electronic devices. Such communication may be performed via an input/output (I/O) interface (not shown).

According to example implementations of the present disclosure, there is provided a computer-readable storage medium having one or more computer instructions stored thereon, wherein the one or more computer instructions are executed by a processor to implement the method described above.

Aspects of the present disclosure are described herein with reference to flowcharts and/or block diagrams of methods, apparatuses (systems), and computer program products implemented in accordance with the present disclosure. It should be understood that each block of the flowchart and/or block diagram, and combinations of blocks in the flowcharts and/or block diagrams, may be implemented by computer-readable program instructions.

These computer-readable program instructions may be provided to a processing unit of a general-purpose computer, a special-purpose computer, or other programmable data processing apparatus to produce a machine, such that the instructions, when executed by a processing unit of a computer or other programmable data processing apparatus, produce means to implement the functions/acts specified in the flowchart and/or block diagram. These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement aspects of the functions/acts specified in the flowchart and/or block diagram.

The computer-readable program instructions may also be loaded onto a computer, other programmable data processing apparatus, or other apparatus, such that a series of operational steps are performed on a computer, other programmable data processing apparatus, or other apparatus to produce a computer-implemented process such that the instructions executed on a computer, other programmable data processing apparatus, or other apparatus implement the functions/acts specified in one or more blocks in the flowchart and/or block diagram.

The flowchart and block diagrams in the figures show architecture, functionality, and operation of possible implementations of systems, methods, and computer program products according to various implementations of the present disclosure. In this regard, each block in the flowchart or block diagram may redisplay a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations of the present disclosure have been described above, which are exemplary, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, practical applications, or improvements to techniques in the marketplace, or to enable others of ordinary skill in the art to understand the implementations disclosed herein.

## Claims

1. A method for augmented reality (AR) interaction, comprising:
displaying indication information of a target object and one or more components of the target object in an AR scene displayed by a user device;
updating rendering of the one or more components in the AR scene based on a change in a posture of the user device; and
in response to the updated one or more components visually matching the indication information, displaying the target object as an entirety in the AR scene.

2. The method of claim 1, wherein displaying the indication information comprises displaying a contour of the target object at a predetermined size and/or location in the AR scene.

3. The method of claim 2, further comprising:
in response to the updated one or more components visually matching the indication information, ceasing displaying the contour in the AR scene.

4. The method of any of claims 1 and 2, further comprising:
in response to receiving an input for the target object after displaying the target object as the entirety, manipulating the target object as an entirety according to the input.

5. The method of any of claims 1 and 2, further comprising: determining whether the one or more components visually match the indication information by:
determining a current placement of an AR camera for the AR scene according to a posture of the user device;
comparing the current placement with a predetermined target placement associated with the target object; and
in response to a difference between the current placement and the target placement being below a predetermined threshold, determining that the one or more components visually match the indication information.

6. The method of any of claims 1 and 2, wherein updating the rendering of the one or more components in the AR scene comprises:
determining a field of view of an AR camera for the AR scene according to a posture of the user device; and
rendering the one or more components in the AR scene according to the field of view of the AR camera.

7. The method of any of claims 1 and 2, further comprising:
in response to the updated one or more components visually matching the indication information, ceasing updating the rendering of the one or more components with the change in the posture of the user device.

8. An apparatus for augmented reality (AR) interaction, comprising:
a display controlling module configured to display indication information of a target object and one or more components of the target object in an AR scene displayed by a user device;
a rendering updating module configured to update rendering of the one or more components in the AR scene based on a change in a posture of the user device; and
an object interacting module configured to, in response to the updated one or more components visually matching the indication information, display the target object as an entirety in the AR scene.

9. The apparatus of claim 7, wherein the display controlling module is configured to display a contour of the target object at a predetermined size and/or location in the AR scene.

10. The apparatus of claim 9, wherein the display controlling module is further configured to, in response to the updated one or more components visually matching the indication information, cease displaying the contour in the AR scene.

11. The apparatus of any of claims 8 and 9, wherein the object interacting module is further configured to, in response to receiving an input for the target object after displaying the target object as the entirety, manipulate the target object as an entirety according to the input.

12. The apparatus of any of claims 8 and 9, further comprising a visual matching module configured to determine whether the one or more components visually match the indication information by:
determining a current placement of an AR camera for the AR scene according to a posture of the user device;
comparing the current placement with a predetermined target placement associated with the target object; and
in response to a difference between the current placement and the target placement being below a predetermined threshold, determining that the one or more components visually match the indication information.

13. The apparatus of any of claims 8 and 9, wherein the rendering updating module is configured to:
determine a field of view of an AR camera for the AR scene according to a posture of the user device; and
render the one or more components in the AR scene according to the field of view of the AR camera.

14. The apparatus of any of claims 8 and 9, wherein the rendering updating module is further configured to:
in response to the updated one or more components visually matching the indication information, cease updating the rendering of the one or more components with the change in the posture of the user device.

15. An electronic device, comprising:
at least one processing unit; and
at least one memory coupled to the at least one processing unit and storing an instruction for execution by the at least one processing unit, the instruction, when executed by the at least one processing unit, causing the device to perform the method of any of claims 1 to 7.

16. A computer-readable storage medium having stored thereon a computer program, the program, when executed by a processor, implementing the method of any of claims 1 to 7.
